Europäisches Patentamt

European Patent Office

Office européen des brevets

(19)

(11) **EP 1 190 498 B1**

(12) **FASCICULE DE BREVET EUROPEEN**

(45) Date de publication et mention
de la délivrance du brevet:
**03.09.2003 Bulletin 2003/36**

(21) Numéro de dépôt: **00948059.1**

(22) Date de dépôt: **26.06.2000**

(51) Int Cl.$^7$: **H04B 1/707**

(86) Numéro de dépôt international:
**PCT/FR00/01780**

(87) Numéro de publication internationale:
**WO 01/003320 (11.01.2001 Gazette 2001/02)**

(54) **PROCEDE ET DISPOSITIF D'EMISSION D'UN SIGNAL RADIO DANS UN SYSTEME DE COMMUNICATION A ACCES MULTIPLE A REPARTITION PAR CODES**

**VERFAHREN UND VORRICHTUNG ZUR ABGABE EINES FUNKSIGNALS IN EINEM KOMMUNIKATIONSSYSTEM MIT KODEMULTIPLEX-VIELFACHZUGRIFF**

**METHOD AND DEVICE FOR TRANSMITTING A RADIO SIGNAL IN A CODE DIVISION MULTIPLE ACCESS COMMUNICATION SYSTEM**

(84) Etats contractants désignés:
**AT BE CH CY DE DK ES FI FR GB GR IE IT LI LU MC NL PT SE**

(30) Priorité: **01.07.1999 FR 9908475**

(43) Date de publication de la demande:
**27.03.2002 Bulletin 2002/13**

(73) Titulaire: **NORTEL NETWORKS SA**
**78280 Guyancourt (FR)**

(72) Inventeurs:
• **DORNSTETTER, Jean-Louis**
**F-78370 Plaisir (FR)**

• **BEN RACHED, Nidham**
**F-75017 Paris (FR)**

(74) Mandataire: **Loisel, Bertrand**
**Cabinet Plasseraud,**
**84, rue d'Amsterdam**
**75440 Paris Cédex 09 (FR)**

(56) Documents cités:
**EP-A- 0 751 630**      **US-A- 5 638 403**
**US-A- 5 787 113**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

La présente invention concerne les radiocommunications à accès multiple à répartition par codes (CDMA, « Code-Division Multiple Access »).

Dans le cadre de la liaison descendante d'un système CDMA, d'une station de base vers des terminaux mobiles, les signaux destinés aux différents terminaux mobiles sont multiplexés sur la même fréquence porteuse. Ils font l'objet d'un étalement de spectre au moyen de codes d'étalement orthogonaux ou quasi-orthogonaux et ils sont additionnés entre eux. Un signal en bande de base est formé par la convolution de la somme de ces signaux et d'une impulsion de mise en forme spectrale. Le signal en bande de base qui en résulte module la fréquence porteuse pour former le signal radio qui est ensuite amplifié avant d'être émis par l'antenne de la station de base.

L'amplificateur de puissance, placé juste avant l'antenne, présente généralement une saturation lorsque son signal d'entrée a une valeur supérieure à un seuil correspondant à la dynamique de l'amplificateur. Cette saturation dégrade les performances du système.

Dans le cas d'un système CDMA, comme les codes d'étalement relatifs aux utilisateurs sont orthogonaux, le signal émis par la station de base peut être vu comme ayant une distribution gaussienne. Ceci implique que lorsque le nombre d'utilisateurs augmente, le signal en bande de base a tendance à prendre de grandes valeurs.

Etant donné que le coût de l'amplificateur de puissance augmente considérablement avec sa dynamique, il est souhaitable de prévoir en amont de cet amplificateur, en particulier à l'extrémité de la chaîne numérique, un dispositif permettant de diminuer la dynamique du signal.

Une méthode connue pour limiter la dynamique du signal d'entrée de l'amplificateur de puissance consiste à tronquer les échantillons du signal en bande de base dont la valeur dépasse un seuil déterminé correspondant à la dynamique maximum souhaitée. Cette troncature brutale nuit à la qualité spectrale du signal puisqu'elle relève le niveau du signal dans les bandes adjacentes. Pour préserver le gabarit spectral spécifié pour l'émission, on est alors amené à filtrer le signal tronqué au moyen d'un filtre passe-bas. Ce filtrage rétablit des pics de puissance du signal de manière gênante pour l'amplificateur, et il altère également le spectre du signal.

Un tel système est décrit par le document EP 0 751 630.

D'autre part, le document US 5 787 113 montre une méthode de troncature utilisant une "inverted Hanning window" centrée sur les échantillons dépassant un certain seuil.

Un but de la présente invention est de proposer une solution simple et efficace pour limiter la dynamique du signal d'entrée de l'amplificateur de puissance en limitant l'altération du spectre du signal

L'invention propose ainsi un procédé d'émission d'un signal radio dans un système de communication à accès multiple à répartition par codes, dans lequel on forme un signal numérique en bande de base par sommation de contributions relatives à plusieurs canaux et convolution par une impulsion de mise en forme, on limite l'amplitude dudit signal numérique en bande de base, on module une fréquence porteuse avec le signal numérique en bande de base d'amplitude limitée, selon une modulation radio linéaire, et on traite le signal radio résultant de la modulation avant de l'émettre, le traitement incluant une amplification de puissance. Pour limiter ladite amplitude, on soustrait du signal numérique en bande de base un signal de correction mis en forme spectralement avec ladite impulsion de mise en forme.

Au lieu de couper le signal aux endroits où son module est plus grand que le maximum fixé, on lui retranche une correction ayant le même spectre que l'impulsion de mise en forme du signal. En conséquence, le spectre initial du signal est conservé, aussi bien dans la bande utile que dans les bandes adjacentes, puisque la modulation appliquée est linéaire. La soustraction revient à ajouter au signal d'origine un léger bruit ayant le même spectre. On peut ainsi se dispenser de filtrer le signal pour compenser des distorsions spectrales.

Le procédé permet en outre, pour des performances données avec un gabarit spectral déterminé, d'utiliser un amplificateur de puissance de dynamique plus faible. Il en résulte une réduction appréciable du coût.

Dans une première version du procédé, le signal de correction comporte, pour au moins un échantillon du signal numérique en bande de base vérifiant un critère de limitation d'amplitude, une impulsion proportionnelle à l'impulsion de mise en forme et centrée sur ledit échantillon. Le critère de limitation d'amplitude peut être que le module de l'échantillon dépasse un seuil déterminé M. Il peut aussi être que la partie réelle ou la partie imaginaire de l'échantillon dépasse le seuil M.

Dans une réalisation particulière, on examine successivement les échantillons du signal numérique en bande de base, et chaque fois qu'un échantillon vérifie le critère de limitation d'amplitude, on soustrait du signal numérique en bande de base une impulsion proportionnelle à l'impulsion de mise en forme et centrée sur ledit échantillon. L'impulsion, que comporte le signal de correction pour un échantillon $S(n)$ du signal numérique en bande de base, est avantageusement proportionnelle à l'impulsion de mise en forme dans le rapport $S(n).[1-M/|S(n)|]$, $|S(n)|$ désignant le module de l'échantillon $S(n)$. Dans une autre réalisation, on détermine l'échantillon de plus grand module dans une fenêtre du signal numérique en bande de base incluant un échantillon vérifiant le critère de limitation d'amplitude, et le signal de correction comporte une impulsion centrée sur ledit échantillon $S(n)$ de plus grand module $|S(n)|$ et proportionnelle à l'impulsion de mise en forme dans le rapport $S(n).[1-M/|S(n)|]$.

Dans une seconde version du procédé, le signal de correction est obtenu par convolution, par l'impulsion de mise en forme, d'une différence entre le signal numérique en bande de base et une version écrêtée du signal numérique en bande de base.

Un autre aspect de l'invention se rapporte à un émetteur radio à accès multiple à répartition par codes, comprenant des moyens pour former un signal numérique en bande de base par sommation de contributions relatives à plusieurs canaux et convolution par une impulsion de mise en forme, des moyens de limitation de l'amplitude dudit signal numérique en bande de base, des moyens de modulation d'une fréquence porteuse avec le signal numérique en bande de base d'amplitude limitée, selon une modulation radio linéaire, et des moyens de traitement du signal radio résultant de la modulation, incluant un amplificateur de puissance. Les moyens de limitation sont agencés pour soustraire du signal numérique en bande de base un signal de correction mis en forme spectralement avec ladite impulsion de mise en forme.

D'autres particularités et avantages de la présente invention apparaîtront dans la description ci-après d'exemples de réalisation non limitatifs, en référence aux dessins annexés, dans lesquels :

- la figure 1 est un schéma synoptique d'un émetteur radio selon l'invention ;
- les figures 2 et 3 sont des organigrammes de procédures de limitation d'amplitude utilisables dans l'émetteur de la figure 1 ; et
- la figure 4 est un schéma synoptique d'une constitution possible du circuit de limitation d'amplitude dans une variante de réalisation de l'invention.

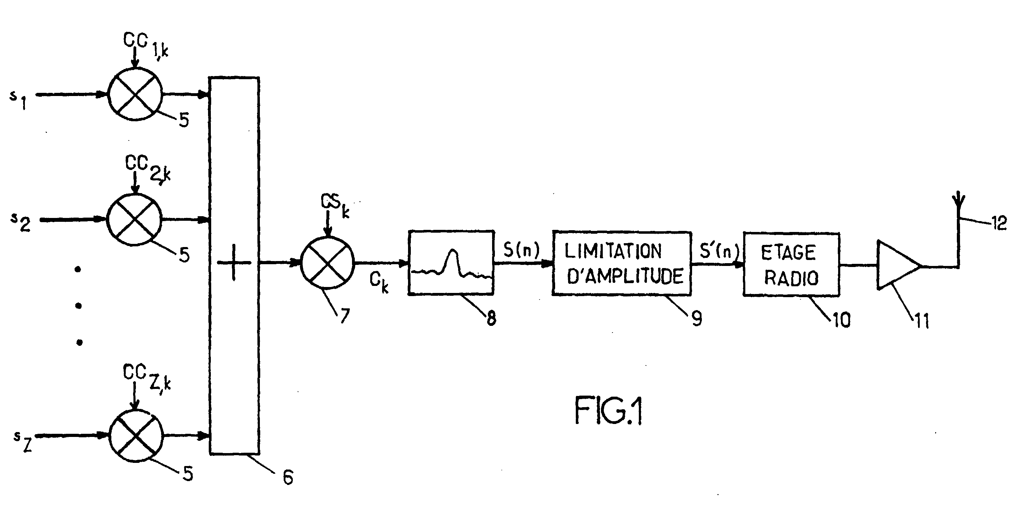

L'invention est applicable dans les stations de base de systèmes de radiocommunication en mode CDMA. Le système considéré à titre d'illustration sur la figure 1 est par exemple du type spécifié par l'ETSI (European Telecommunications Standard Institute) pour le système CDMA à large bande (W-CDMA) à duplex fréquentiel (FDD) dans le cadre de l'UMTS (« Universal Mobile Telecommunications System »).

Les circuits de traitement de la station de base comprennent une partie numérique 5-9 pour les traitements en bande de base, et une partie analogique 10-11 pour les traitements en radiofréquence. La partie numérique peut être réalisée, comme il est usuel, en programmant des processeurs de signal numérique (DSP) ou au moyen de circuits intégrés d'application spécifique (ASIC).

Les trains binaires $s_z$ à émettre par la station de base sur les différents canaux d'utilisateur ($1 \leq z \leq Z$) sont d'abord multipliés par des codes d'étalement respectifs $CC_{z,k}$, au moyen de multiplieurs 5, puis sommés par l'additionneur 6 pour former un signal numérique combiné. Dans l'exemple considéré, les bits d'information $s_z$ prennent les valeurs +1 et -1, et sont convertis en parallèle sur une voie en phase (I) et une voie en quadrature (Q), et multipliés par des codes d'étalement $CC_{z,k}$. Un multiplieur 7 multiplie le signal complexe de sortie de l'additionneur 6 par un autre code d'étalement $CS_k$ propre à la cellule desservie par la station de base.

Les codes d'étalement $CC_{z,k}$ et $CS_k$ sont composés d'échantillons réels à valeurs $\pm 1$, appelés « chips ». La cadence $F_c = 1/T_c$ des chips du code $CS_k$ est supérieure à celle des bits $s_z$. Elle est de 4,096 Mchip/s dans le cas considéré. Celle de chaque code $CC_{z,k}$ est de la forme $F_c/2^{m(z)}$, avec $m(z)$ entier positif ou nul. Les codes $CC_{z,k}$ sont orthogonaux deux à deux, ce qui assure que chaque terminal mobile destinataire pourra récupérer la portion de signal qui lui est destinée, par convolution du signal reçu par son code d'étalement. Les codes $CS_k$ sont quasi-orthogonaux d'une station de base à une autre, ce qui permet de réutiliser la même fréquence porteuse dans différentes cellules. En sortie du multiplieur 7, le signal numérique complexe se compose d'échantillons numériques $c_k$ à la cadence $F_c$, dont l'expression est :

$$c_k = \sum_{z=1}^{Z} CS_k . CC_{z,k} . s_z(k)$$

où $k$ indexe les chips des codes d'étalement, et $s_z(k)$ désigne la valeur complexe (I,Q) du signal $s_z$ au moment du chip $k$. On voit que la multiplicité ($Z$) des canaux logiques multiplexés fait notablement augmenter l'amplitude du signal $c_k$.

Le circuit 8 réalise la mise en forme du signal en bande de base en réalisant la convolution de la séquence $c_k$ par une impulsion $P(t)$ qui, de façon connue, présente avantageusement la propriété d'être de type demi-Nyquist. A titre d'exemple, cette impulsion peut être en racine de cosinus surélevé, avec un coefficient de roll-off $\alpha = 0,22$ dans le domaine fréquentiel. Le signal en bande de base $S(t)$ qui en résulte a pour expression :

$$S(t) = \sum_k c_k . P(t - k.T_c)$$

Ce signal en bande de base est échantillonné en sortie du circuit 8, à une fréquence $F_e = 1/T_e$ généralement supérieure à celle des chips ($T_e = T_c/4$ par exemple). Les échantillons correspondants sont notés $S(n)$, $n$ désignant l'index de l'échantillon.

Un circuit 9 de limitation d'amplitude, décrit en détail ci-après, agit pour limiter le module des échantillons complexes $S(n)$. Le signal en bande de base d'amplitude limitée S'(n) est converti en analogique et soumis à l'étage radio 10, qui effectue la modulation de la fréquence porteuse ainsi que les filtrages et contrôles requis. La modulation linéaire appliquée est une modulation de phase à quatre états (QPSK, « quadrature phase shift keying »), les parties réelle et imaginaire du signal complexe en bande de base S'(n) modulant deux ondes en quadrature à la fréquence porteuse qui sont ensuite sommées.

Le signal radio de sortie de l'étage 10 est amplifié par l'amplificateur de puissance 11 avant d'être émis par l'antenne 12 de la station de base.

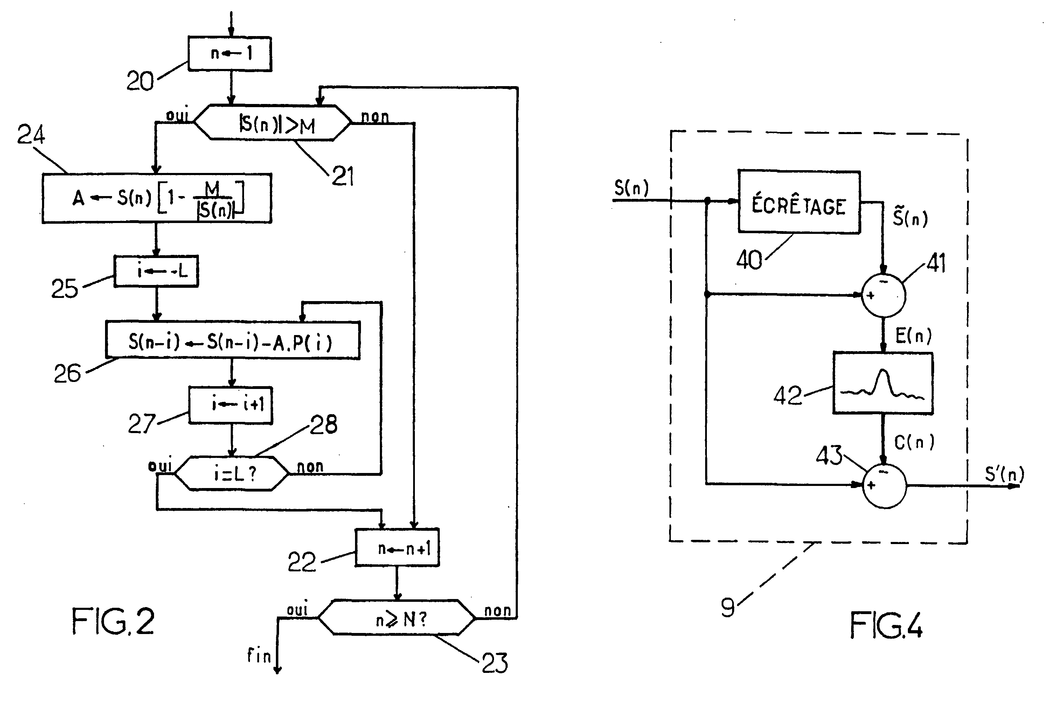

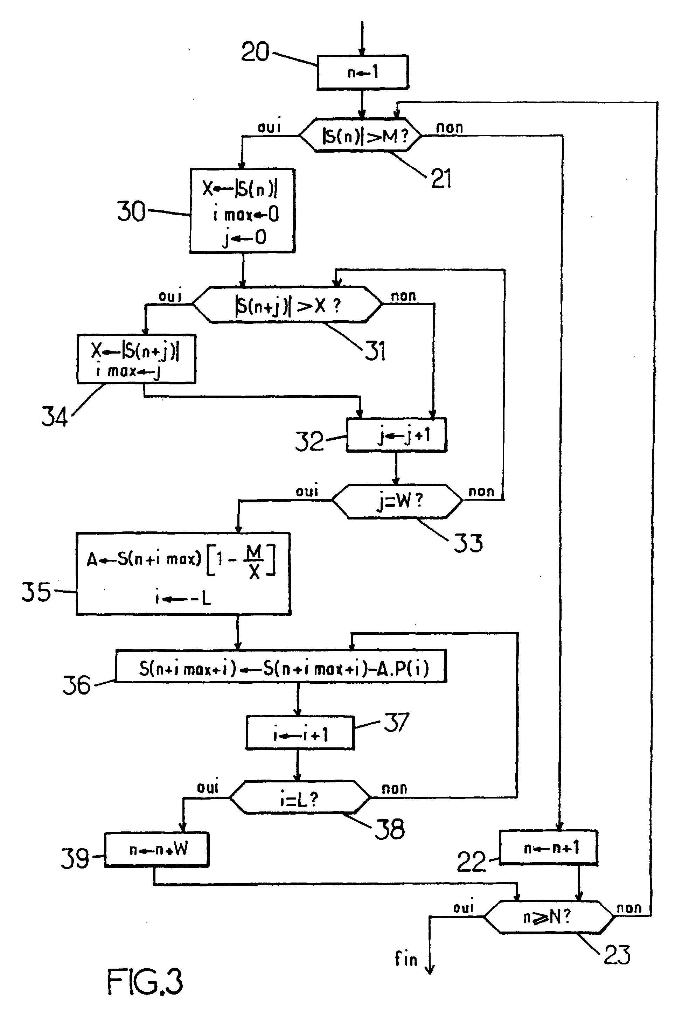

On désigne par M la dynamique maximum souhaitée du signal S(n), afin d'éviter la saturation de l'amplificateur de puissance 11. Le circuit 9 agit pour limiter sensiblement à M l'amplitude |S'(n)| du signal S'(n). Les figures 2 et 3 montrent des exemples de procédures utilisables à cette fin par le circuit 9. Chacune de ces procédures est appliquée sur des blocs de signal représentant N échantillons à la cadence $F_e$ ($1 \leq n \leq N$ ; $N \approx 10^4$ par exemple).

La procédure est initialisée par n=1 à l'étape 20. Pour chaque valeur de l'index d'échantillon n, le module |S(n)| du signal S(n) est comparé au seuil M lors du test 21. L'amplitude du signal est acceptable quand |S(n)| ≤ M, de sorte que l'index n est simplement incrémenté à l'étape 22 avant d'être comparé à la taille N du bloc (test 23). La procédure est terminée quand n ≥ N au test 23.

Quand |S(n)| > M lors du test 21, le circuit 9 soustrait du signal S(n) une impulsion proportionnelle à l'impulsion de mise en forme P(t).

L'impulsion P(t) est échantillonnée à la fréquence $F_e$, normalisée et centrée. On note P(i) les échantillons correspondants, avec -L ≤ i < +L. Le maximum de l'impulsion normalisée est P(0) = 1. Le support $2.L.T_e$ de l'impulsion échantillonnée peut être de l'ordre de $15.T_c$.

Dans la réalisation de la figure 2 (étapes 24 à 28), la soustraction ramène l'amplitude de l'échantillon S(n) à la limite fixée M. L'amplitude complexe A de l'impulsion à soustraire est calculée à l'étape 24:

$$A = S(n).\left[1 - \frac{M}{|S(n)|}\right].$$

La soustraction 26 est opérée dans la boucle suivante 25-28 (qui peut être exécutée en parallèle), avant de passer à l'étape d'incrémentation 22. L'étape 26 consiste à soustraire A.P(i) de l'échantillon S(n+i) pour chaque valeur de i telle que -L ≤ i < L.

La variante de la figure 3 diminue la quantité de calculs requise par rapport à la procédure de la figure 2. On utilise une fenêtre temporelle de largeur 2W échantillons dans laquelle on recherche l'échantillon d'amplitude maximale lorsque le critère de limitation de l'étape 21 est vérifié. L'impulsion soustraite est alors centrée sur cet échantillon d'amplitude maximale.

Quand |S(n)| > M lors du test 21, la variable X, représentant le module maximum du signal sur la fenêtre, est initialisée à |S(n)|, et les index imax et j à 0 (étape 30). Si |S(n+j)| > X au test 31, l'index j est simplement incrémenté à l'étape 32 avant d'être comparé à la demi-largeur W à l'étape 33. Sinon, l'incrémentation 32 est précédée (34) par la mise à jour X = |S(n+j)| et imax = j.

A l'issue de la boucle 30-34 de recherche du maximum sur la fenêtre (j = W au test 33), l'amplitude complexe A de l'impulsion à soustraire est calculée à l'étape 35:

$$A = S(n+imax).\left[1 - \frac{M}{X}\right].$$

La soustraction 36 est opérée dans la boucle suivante 35-38 (qui peut être exécutée en parallèle), avant de passer à l'étape 39 où l'index n est augmenté de la demi-largeur W. L'étape 36 consiste à soustraire A.P(i) de l'échantillon S(n+imax+i) pour chaque valeur de i telle que -L ≤ i < L. Après l'étape 39, le circuit 9 passe au test de fin de boucle 23.

On note le caractère récursif des procédures représentées sur les figures 2 et 3, la soustraction effectuée en raison du dépassement d'un échantillon ayant des répercussions sur le signal traité en avant et en arrière de cet échantillon. La soustraction de l'impulsion P(t) centrée sur un échantillon S(n) peut, dans certains cas, faire qu'un échantillon S(n') avec n-L < n' < n précédemment examiné repasse au-dessus du seuil M. Ce dépassement est toutefois d'amplitude moindre que celui de l'échantillon S(n) avant la soustraction, de sorte que le phénomène de saturation de l'amplificateur est réduit. En outre, on peut quasiment éliminer ces dépassements en procédant plusieurs fois de suite (par exemple trois fois) à la boucle de traitement, le signal S'(n) étant obtenu à l'issue de la dernière itération.

Le procédé proposé pour limiter l'amplitude du signal d'entrée de l'amplificateur de puissance permet, par rapport à un procédé classique par troncature et filtrage, de gagner de l'ordre de 1,5 dB sur la dynamique d'entrée de l'amplificateur de puissance pour une même probabilité de dépassement et des performances de transmission identiques.

Dans ces conditions, on peut, pour une application donnée, utiliser un amplificateur nettement plus économique grâce à la réduction de la dynamique

En outre, le spectre du signal émis est identique à celui du signal initial, ce qui évite les problèmes d'interférences dans les bandes de fréquence adjacentes.

Dans les procédures des figures 2 et 3, le signal de correction soustrait du signal numérique en bande de base S(n) consiste en une somme d'impulsions élémentaires proportionnelles à l'impulsion de mise en forme P(t), dont les amplitudes sont calculées après application d'un critère de limitation 21. Il est à noter que, dans une variante requérant moins de calculs, le critère de limitation pourrait porter sur les parties réelle et imaginaire du signal en bande de base S(n) : ce critère pourrait être considéré comme vérifié chaque fois que soit la partie réelle soit la partie imaginaire de S(n) dépasse le seuil M. La moindre précision de cette dernière variante peut être au moins en partie compensée en baissant le seuil M.

Dans la réalisation représentée sur la figure 4, le circuit 9 de limitation d'amplitude comporte une unité d'écrêtage 40 qui écrête le signal numérique échantillonné en bande de base S(n). Elle produit ainsi un signal écrêté $\tilde{S}(n)$ par exemple égal à

$$S(n).\min\left\{1;\frac{M}{|S(n)|}\right\}.$$

Ce signal écrêté $\tilde{S}(n)$ est soustrait du signal S(n) par le soustracteur 41 qui délivre un signal d'erreur E(n). Un filtre numérique 42 calcule la convolution du signal d'erreur E(n) par l'impulsion de mise en forme P(t). Le signal de correction C(n) produit par le filtre 42 est soustrait du signal S(n) par le soustracteur 43. Comme dans les exemples précédents, le circuit 9 selon la figure 4 peut fonctionner de façon récursive, auquel cas la sortie du soustracteur 43 est soumise à un autre étage comportant des unités semblables aux unités 40 à 43, le signal corrigé S'(n) étant fourni après le nombre d'étages requis.

**Revendications**

1. Procédé d'émission d'un signal radio dans un système de communication à accès multiple à répartition par codes, dans lequel on forme un signal numérique en bande de base par sommation de contributions relatives à plusieurs canaux et convolution par une impulsion de mise en forme, on limite l'amplitude dudit signal numérique en bande de base, on module une fréquence porteuse avec le signal numérique en bande de base d'amplitude limitée, selon une modulation radio linéaire, et on traite le signal radio résultant de la modulation avant de l'émettre, le traitement incluant une amplification de puissance, **caractérisé en ce que** pour limiter ladite amplitude, on soustrait du signal numérique en bande de base un signal de correction mis en forme spectralement avec ladite impulsion de mise en forme.

2. Procédé selon la revendication 1, dans lequel le signal de correction comporte, pour au moins un échantillon du signal numérique en bande de base vérifiant un critère de limitation d'amplitude, une impulsion proportionnelle à l'impulsion de mise en forme et centrée sur ledit échantillon.

3. Procédé selon la revendication 2, dans lequel ledit critère de limitation d'amplitude est que le module de l'échantillon dépasse un seuil déterminé M.

4. Procédé selon la revendication 2, dans lequel ledit critère de limitation d'amplitude est que la partie réelle ou la partie imaginaire de l'échantillon dépasse un seuil déterminé M.

5. Procédé selon la revendication 3 ou 4, dans lequel on examine successivement les échantillons du signal numérique en bande de base, et chaque fois qu'un échantillon vérifie le critère de limitation d'amplitude, on soustrait du signal numérique en bande de base une impulsion proportionnelle à l'impulsion de mise en forme et centrée sur ledit échantillon.

6. Procédé selon la revendication 5, dans lequel ladite impulsion, que comporte le signal de correction pour un échantillon S(n) du signal numérique en bande de base, est proportionnelle à l'impulsion de mise en forme dans le rapport S(n).[1-M/|S(n)|], |S(n)| désignant le module de l'échantillon S(n).

7. Procédé selon la revendication 3 ou 4, dans lequel on détermine l'échantillon de plus grand module dans une fenêtre du signal numérique en bande de base incluant un échantillon vérifiant le critère de limitation d'amplitude, et le signal de correction comporte une impulsion centrée sur ledit échantillon S(n) de plus grand module |S(n)| et proportionnelle à l'impulsion de mise en forme dans le rapport S(n).[1-M/|S(n)|].

8. Procédé selon la revendication 1, dans lequel le signal de correction est obtenu par convolution, par l'impulsion de mise en forme, d'une différence entre le signal numérique en bande de base et une version écrêtée du signal numérique en bande de base.

9. Emetteur radio à accès multiple à répartition par codes, comprenant des moyens (5-8) pour former un signal numérique en bande de base par sommation de contributions relatives à plusieurs canaux et convolution par une impulsion de mise en forme, des moyens (9) de limitation de l'amplitude dudit signal numérique en bande de base, des moyens (10) de modulation d'une fréquence porteuse avec le signal numérique en bande de base d'amplitude limitée, selon une modulation radio linéaire, et des moyens de traitement du signal radio résultant de la modulation, incluant un amplificateur de puissance (11), **caractérisé en ce que** les moyens de limitation sont agencés pour soustraire du signal numérique en bande de base un signal de correction mis en forme spectralement avec ladite impulsion de mise en forme.

10. Emetteur radio selon la revendication 9, dans lequel le signal de correction comporte, pour au moins un échantillon du signal numérique en bande de base vérifiant un critère de limitation d'amplitude, une impulsion proportionnelle à l'impulsion de mise en forme et centrée sur ledit échantillon.

11. Emetteur radio selon la revendication 9, dans lequel le signal de correction est obtenu par convolution, par l'impulsion de mise en forme, d'une différence entre le signal numérique en bande de base et une version écrêtée du signal numérique en bande de base.

**Patentansprüche**

1. Verfahren zum Senden eines Funksignals in einem Kommunikationssystem mit Kodemultiplex-Vielfachzugriff, in dem man durch Aufsummieren der Beiträge bezüglich mehrerer Kanäle und durch Faltung mit einen Formungsimpuls ein digitales Signal im Basisband bildet, in dem man die Amplitude des digitalen Signals im Basisband begrenzt, in dem man eine Trägerfrequenz mit dem digitalen Signal im Basisband mit begrenzter Amplitude entsprechend einer linearen Funkmodulation moduliert und in dem man das Funksignal, das sich aus der Modulation ergibt, verarbeitet, bevor man es sendet, wobei die Verarbeitung eine Leistungsverstärkung einschließt, **dadurch gekennzeichnet, dass** man zur Amplitudenbegrenzung von dem digitalen Signal im Basisband ein Korrektursignal abzieht, das spektral mit dem Formungsimpuls aufbereitet ist.

2. Verfahren nach Anspruch 1, in dem das Korrektursignal für wenigstens eine Probe des digitalen Signals im Basisband, die ein Amplitudenbegrenzungskriterium überprüft, einen Impuls enthält, der zum Formungsimpuls proportional ist und um die Probe zentriert ist.

3. Verfahren nach Anspruch 2, in dem das Amplitudenbegrenzungskriterium darin besteht, dass das Modul der Probe eine bestimmte Schwelle M überschreitet.

4. Verfahren nach Anspruch 2, in dem das Amplitudenbegrenzungskriterium darin besteht, dass der Realteil oder der Imaginärteil der Probe eine bestimmte Schwelle M überschreitet.

5. Verfahren nach Anspruch 3 oder 4, in dem man nacheinander die Proben des digitalen Signals im Basisband untersucht und man jedes Mal, wenn eine Probe das Amplitudenbegrenzungskriterium erfüllt, vom digitalen Signal im Basisband einen Impuls abzieht, der zum Formungsimpuls proportional und um die Probe zentriert ist.

6. Verfahren nach Anspruch 5, in dem der Impuls, der das Korrektursignal für eine Probe S(n) des digitalen Signals im Basisband enthält, proportional zum Formungsimpuls in der Beziehung $S(n).[1-M/S(n)|]$ ist, wobei $|S(n)|$ den Modul der Probe S(n) bezeichnet.

7. Verfahren nach Anspruch 3 oder 4, in dem man die Probe mit dem größten Modul in einem Fenster des digitalen Signals im Basisband bestimmt, das eine Probe einschließt, die das Amplitudenbegrenzungskriterium erfüllt, und in dem ein Korrektursignal einen Impuls enthält, der um die Probe S(n) des größten Moduls $|S(n)|$ zentriert und proportional zum Formungsimpuls in der Beziehung $S(n).[ 1-M/|S(n)|]$ ist.

8. Verfahren nach Anspruch 1, in dem das Korrektursignal durch Faltung, durch den Formungsimpuls, von einer Differenz zwischen dem digitalen Signal im Basisband und einer Version des digitalen Signals im Basisband, bei der die Impulsspitzen abgeschnitten sind, erhalten wird.

9. Radiosender mit Kodemultipex-Vielfachzugriff, der Mittel (5-8) enthält, um ein digitales Signal im Basisband durch Aufsummieren der Beiträge bezüglich mehrerer Kanäle und durch Faltung mit einen Formungsimpuls zu bilden, Mittel (9) zur Amplitudenbegrenzung des digitalen Signals im Basisband, Mittel (10) zur Modulation einer Trägerfrequenz mit dem digitalen Signal im Basisband, mit begrenzter Amplitude, entsprechend einer linearen Funkmodulation, und Mittel zur Verarbeitung des aus der Modulation resultierenden Funksignals, die einen Leistungsverstärker (11) einschließt, **dadurch gekennzeichnet, dass** die Begrenzungsmittel eingerichtet sind, um von dem digitalen Signal im Basisband ein Korrektursignal abzuziehen, das spektral mit dem Formungsimpuls aufbereitet ist.

10. Radiosender nach Anspruch 9, in dem das Korrektursignal für wenigstens eine Probe des digitalen Signals im Basisband, die ein Amplitudenbegrenzungskriterium erfüllt, einen Impuls enthält, der zum Formungsimpuls proportional und um die Probe zentriert ist.

**11.** Radiosender nach Anspruch 9, in dem das Korrektursignal durch Faltung, durch den Formungsimpuls, von einer Differenz zwischen dem digitalen Signal im Basisband und einer Version des digitalen Signals im Basisband, bei der die Impulsspitzen abgeschnitten sind, erhalten wird.

**Claims**

**1.** A method for transmitting a radio signal in a code division multiple access communication system, comprising the steps of forming a digital baseband signal by summing contributions relating to a plurality of channels and convolving with a shaping pulse, limiting the amplitude of said digital baseband signal, modulating a carrier frequency with the digital baseband signal of limited amplitude, according to a linear radio modulation, and processing the radio signal resulting from the modulation before transmitting it, whereby the processing includes a power amplification, **characterized in that** to limit said amplitude, a correction signal spectrally shaped with said shaping pulse is subtracted from the digital baseband signal.

**2.** The method as claimed in claim 1, wherein the correction signal comprises, for at least one sample of the digital baseband signal satisfying an amplitude limitation criterion, a pulse proportional to the shaping pulse and centered on said sample.

**3.** The method as claimed in claim 2, wherein said amplitude limitation criterion is that the modulus of the sample exceeds a specified threshold M.

**4.** The method as claimed in claim 2, wherein said amplitude limitation criterion is that the real part or the imaginary part of the sample exceeds a specified threshold M.

**5.** The method as claimed in claim 3 or 4, wherein the samples of the digital baseband signal are examined in succession and whenever a sample satisfies the amplitude limitation criterion, a pulse proportional to the shaping pulse and centered on said sample is subtracted from the digital baseband signal.

**6.** The method as claimed in claim 5, wherein said pulse, which the correction signal comprises for a sample $S(n)$ of the digital baseband signal, is proportional to the shaping pulse in the ratio $S(n).[1-M/|S(n)|]$, where $|S(n)|$ designates the modulus of the sample $S(n)$.

**7.** The method as claimed in claim 3 or 4, wherein the sample of largest modulus is determined in a window of the digital baseband signal which includes a sample satisfying the amplitude limitation criterion, and the correction signal comprises a pulse centered on said sample $S(n)$ of largest modulus $|S(n)|$ and proportional to the shaping pulse in the ratio $S(n).[1-M/|S(n)|]$.

**8.** The method as claimed in claim 1, wherein the correction signal is obtained by convolving, with the shaping pulse, a difference between the digital baseband signal and a clipped version of the digital baseband signal.

**9.** A code division multiple access radio transmitter, comprising means (5-8) of forming a digital baseband signal by summing contributions relating to a plurality of channels and convolving with a shaping pulse, means (9) of limiting the amplitude of said digital baseband signal, means (10) of modulating a carrier frequency with the digital baseband signal of limited amplitude, according to a linear radio modulation, and means of processing the radio signal resulting from the modulation, including a power amplifier (11), **characterized in that** the limiting means are arranged to subtract a correction signal spectrally shaped with said shaping pulse from the digital baseband signal.

**10.** The radio transmitter as claimed in claim 9, wherein the correction signal comprises, for at least one sample of the digital baseband signal satisfying an amplitude limitation criterion, a pulse proportional to the shaping pulse and centered on said sample.

**11.** The radio transmitter as claimed in claim 9, wherein the correction signal is obtained by convolving, with the shaping pulse, a difference between the digital baseband signal and a clipped version of the digital baseband signal.

FIG.1

FIG.4

FIG.2

FIG.3